# EUROPEAN PATENT APPLICATION

(11) **EP 1 210 881 A1**
(43) Date of publication of application: **05.06.2002**
(21) Application number: 00830799.3
(22) Date of filing: 01.12.2000
(51) Int. Cl.: A23L 1/31, A23L 1/315, A23L 1/317, A23L 1/325, A23P 1/00

(54) **A meat or fish snack on a stick**

(71) Applicant: Fileni Simar - S.R.L., 60035 Jesi (AN) (IT)
(72) Inventor: Fileni, Giovanni, 60030 San Marcello (AN) (IT)
(74) Representative: Baldi, Claudio

(57) **Abstract**

The present invention relates to a meat or fish snack on a stick, consisting in a piece of preferably pre-cooked meat or fish provided with a holding stick.

## Description

The present patent application for industrial invention relates to a meat or fish snack on a stick, which is meant to considerably innovate the sector of snacks, i.e. food for fast consumption mainly addressed to young dynamic people who do not have much time or do not want to sit at a table in restaurants, cafeterias or fast food places.

So far, snacks have been mainly represented by milk derivatives and/or cereal-based products, such as cookies, small cakes, ice cream, yoghurt, etc., as well as potato chips, peanuts and pop-corn. No meat or fish-based snacks are known so far.

This is probably because meat or fish meals must be served hot and require the use of cutlery (except for traditional sandwiches).

Therefore, consumers of fast snacks are forced to follow a repetitive diet and, most of all, to renounce an important part of a correct diet, that is the contribution of the very important nutritious elements contained in meat or fish.

In view of the above considerations the snack according to the present invention has been devised, comprising a piece of preferably bread-coated, pre-cooked meat or fish (chicken-breast, frankfurter, cod-fish fillet etc.) provided with a disposable wooden holding stick, of the type used for ice-cream.

The structure of the snack according to the present invention allows for overcoming the aforementioned difficulties that have so far impaired the consumption of meat or fish fast meals.

Being preferably served hot, the snack according to the present invention is heated before being sold to customers. The presence of the holding stick allow customers to handle it without any problems (thus avoiding the use of plates, trays or other similar items) and bite directly into it, without using cutlery.

In order to make it more appealing from the commercial viewpoint, the snack according to the present invention can be realised in different versions, all of them having the traditional shapes of ice cream on a stick.

For major clarity the description continues with reference to the enclosed drawings, which are intended for purposes of illustration and not in a limiting sense, whereby:
- Fig. 1 is an axonometric view of a first preferred embodiment of the snack according to the present invention.
- Fig. 2 is an axonometric view of a second preferred embodiment of the snack according to the present invention.
- Fig. 3 is a cross-section of Fig. 2 with the plane A-A.

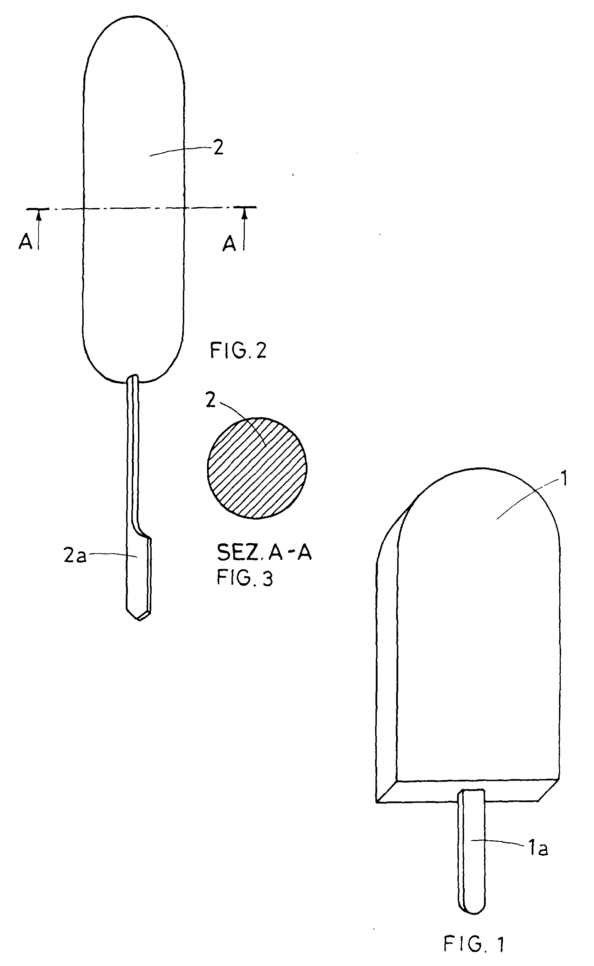

In particular, Fig. 1 shows an embodiment (1) of the new meat or fish snack having one of the most traditional shapes of vanilla and chocolate ice-cream on a stick, that is a flat shape with upper rounded border and square lower border. As shown in the figure, the wooden holding stick (1a) is inserted in the centre of the lower border.

Fig. 2 and 3 show an alternative embodiment (2) of the invention consisting in a meat or fish piece with cylindrical shape (particularly suitable for frankfurters or similar products) with the holding stick (2) inserted into its lower border. The second embodiment of the invention is inspired by the shape of the ice cream known as "banana-split".

It is understood that the present invention allows for realising meat or fish snacks on a stick with shapes other than the ones shown in the three enclosed figures.

## Claims

1. A snack on a stick **characterised by** the fact that it comprises a piece of preferably pre-cooked meat or fish provided with holding stick (1a or 2a).

2. A snack on a stick according to claim 1, **characterised by** the fact that it comprises a piece of meat or fish having a flat shape with upper rounded border and square lower border, with the holding stick (1a) inserted in the centre of the lower border.

3. A snack on a stick according to claim 1, **characterised by** the fact that it comprises a piece of meat or fish having a cylindrical shape, with the holding stick (2a) inserted into its lower border.
